# EUROPÄISCHE PATENTANMELDUNG

(11) **EP 3 819 486 A1**
(43) Veröffentlichungstag der Anmeldung: **12.05.2021**
(21) Anmeldenummer: 20203777.6
(22) Anmeldetag: 26.10.2020
(51) Int. Cl.: F02B 37/02, F01D 9/02, F01D 17/16, F02B 37/24, F02C 6/12

(54) **ABGASTURBOLADER FÜR HOCHLEISTUNGSMOTORKONZEPTE**

(30) Priorität: 08.11.2019 DE 102019217316
(71) Anmelder: VOLKSWAGEN AG, 38440 Wolfsburg (DE)
(72) Erfinder: Gessenhardt, Christopher, 39356 Weferlingen (DE); Hagelstein, Dirk, 38110 Braunschweig (DE); Czapka, Tobias, 22159 Hamburg (DE)

(57) **Zusammenfassung**

Die Erfindung betrifft eine Abgasturboladeranordnung (1) für eine turboaufgeladene Brennkraftmaschine mit einem schneckenartig ausgebildetem Gehäuse (2), aufweisend mindestens zwei getrennte Fluten (3, 4), mindestens eine die benachbarten Fluten (3, 4) trennende Trennzunge (5) und ein Turbinenlaufrad (6), wobei die Trennzunge (5) derart angeordnet ist, dass das dem Turbinenlaufrad (6) zugewandte Ende (7) der Trennzunge (5) von dem Rand (8) des Turbinenlaufrads (6) derart beabstandet ist, dass ein Übersprechen zwischen den Fluten (3, 4) in Strömungsrichtung vor dem Turbinenlaufrad (6) auftritt, wobei in Abhängigkeit des Abstands d_{TT} zwischen dem Trennzungenende (7) und dem Rand des Turbinenlaufrads (8) ein Übersprechquerschnitt A_{ÜS} bestimmbar ist. Erfindungsgemäß ist vorgesehen, dass
a. die Abgasturboladeranordnung (1) einen relativen Übersprechquerschnitt A_{REL} = A_{ÜS} / A_{TR} größer oder gleich 0,06, insbesondere größer oder gleich 0,1 aufweist, wenn das Turbinenlaufrad (6) eine feste Turbinengeometrie aufweist, wobei
b. die Abgasturboladeranordnung (1) einen relativen Übersprechquerschnitt A_{REL} = A_{ÜS} / A_{TR} größer oder gleich 0,1 aufweist, wenn das Turbinenlaufrad (6) eine variable Turbinengeometrie (9) aufweist,
wobei A_{TR} den Austrittsquerschnitt am Turbinenlaufrad (6) angibt.

## Beschreibung

Die Erfindung betrifft eine Abgasturboladeranordnung mit den Merkmalen des Oberbegriffes des Patentanspruches 1 für Hochleistungsmotorkonzepte.

Bei aufgeladenen Brennkraftmaschinen mit mehrzylindrigen Verbrennungsmotoren führt ein gemeinsamer Abgassammler des Abgasstrangs, der die Auslasskanäle mit der Abgasturbine verbindet, zu einem sogenannten Übersprechen eines Abgasstoßes von aus einem der Brennräume ausgestoßenen Abgas auf die übrigen Brennräume. Die hohe spezifische Leistung erfordert zunehmende Entdrosselung der Abgaskanäle bzw. Reduzierung der Ausschiebearbeit. In diesem Zusammenhang werden oftmals verlängerte Auslasssteuerzeiten verwendet, um eine Frühverlagerung des Auslassöffnens bei vergleichbarem Auslassschluss zu erzielen. Dies kann vor allem bei einem Betrieb des Verbrennungsmotors mit erhöhter Last zu einer unerwünschten Beeinflussung des Betriebsverhaltens führen, da es zu einem Rückströmen von Abgas aus dem Abgassammler in die Brennräume kommen kann. Dies kann mit einer erhöhten Restgasrate in diesen Brennräumen und somit beispielsweise bei Ottomotoren mit einer erhöhten Klopfneigung und daraus folgend mit einer Reduzierung des Verbrennungswirkungsgrads und des erzeugbaren Drehmoments verbunden sein. Zudem kommt es zu einer späteren Schwerpunktlage und zu erhöhten Abgastemperaturen vor der Turbine. Generell gilt: je größer die Auslasssteuerbreite, umso höher ist das Abgasübersprechen und damit auch die Restgasrate bei ansonsten vergleichbarer Motorkonfiguration.

Bei Brennkraftmaschinen mit Abgasturbolader und getrennten Abgasfluten, die jeweils nur einen Teil der Brennräume mit der Abgasturbine des Abgasturboladers verbinden, hängt die Stärke des Übersprechens in einem erheblichen Maße von der Ausführung der Abgasturbine ab. Eine Segmentturbine bzw. Fluten getrennte Turbine ermöglicht beispielsweise eine signifikante Reduzierung des Übersprechens im Vergleich zu einer Kombination einer einfachen Abgasflut mit einer konventionellen Abgasturbine, weil ein Zusammenführen der über die verschiedenen Abgasfluten geführten Abgasströme erst in den Turbinenlaufrädern der Segmentturbinen erfolgt, wobei die Abgasströme zudem in unterschiedlichen, in der Regel um 180° bezüglich der Rotationsachsen versetzten Umfangsabschnitten der Turbinenlaufräder in diese eingeleitet werden. Segmentturbinen bewirken jedoch bei einer Kombination mit getrennten Abgasfluten prinzipbedingt einen hohen Abgasgegendruck, da die in den einzelnen Auslasstakten aus den Brennräumen ausgeschobenen Abgasmengen jeweils nur einen Teil der von den Abgasfluten und der Abgasturbine insgesamt bereit gestellten Strömungsvolumina durchströmen. Aus hohen Abgasgegendrücken resultieren in der Regel hohe Ausschiebeverluste, erhöhte Restgasraten und dadurch bedingt erhöhte Klopfneigungen der Verbrennungsmotoren.

Eine Verwendung getrennter Abgasfluten in Kombination mit einer Twinscroll-Turbine eines Abgasturboladers ermöglicht ebenfalls eine Reduzierung des Übersprechens zwischen den Brennräumen; dies jedoch in einem im Vergleich zu einer Segmentturbine geringeren Maße, weil bei Twinscroll-Abgasturboladern die separierten Abgasströme lediglich axial bezüglich der Rotationsachse des Turbinenlaufrads versetzt, gleichzeitig jedoch jeweils in der Regel über (annähernd) den vollen Umfangs des Turbinenlaufrads und folglich parallel in das Turbinenlaufrad eingeleitet werden. Da auch bei einer Kombination aus getrennten Abgasfluten und Twinscroll-Turbine die einzelnen Abgasströme nur einen Teil der von den Abgasfluten und der Abgasturbine (einlassseitig) insgesamt zur Verfügung gestellten Strömungsvolumina durchströmen, führt eine solche Kombination ebenfalls zu einem erhöhten Abgasgegendruck, der jedoch in der Regel etwas geringer als bei einer Segmentturbine ist.

Bei den genannten Konzepten ergeben sich jedoch komplexe Turbinengehäusegeometrien mit reduzierter Temperaturfestigkeit und erhöhten Druckverlusten im Turbinengehäuse. Im Vergleich mit der Dual Volute (Fluten getrennte Turbine) Anordnung lässt sich mit der TwinScroll immer nur eine geringere Lauflänge der Flutenteilung umsetzen. Bei der Dual Volute Variante tritt zudem eine radiale Wechsellast auf das Turbinenlaufrad infolge der Teilbeaufschlagung auf.

Um die genannten Nachteile zu mindern wurden sogenannte Wastegate-Konzepte entwickelt, die einen Bypass zwischen den Fluten bzw. zwischen den Scrolls vorsieht. Wastegate-Konzepte haben jedoch den bekannten Nachteil, dass insbesondere im Nennleistungsbereich hohe Wirkungsgradverluste infolge des Bypassens von Abgasmassenstrom entstehen und ferner die Flutentrennung komplett aufgehoben wird.

Eine weitere Möglichkeit zur Minderung der vorgenannten Nachteile bietet ein Flutenverbindungsventil. wodurch nicht zwingend eine Öffnung des Wastegates erforderlich wird. Sie reduzieren in erster Linie das Anstauverhalten der Turbine und ermöglichen ein stärkeres Abgasübersprechen. Das Flutenverbindungsventil hat seinerseits jedoch Packagenachteile, Herstellungs- und damit Kostennachteile und ist thermisch stark belastet.

Ein weiterer Ansatz zur Verminderung der vorgenannten Nachteile von gattungsgemäßen Abgasturboladern wird in den internationalen Patentanmeldungen WO 2015/179353 A1 und WO 2018/175678 A1 beschrieben. Hier wird eine Dual Volute Turboladeranordnung offenbart, wobei die Fluten mit einer gepulsten Aufladung jeweils gegen eine in dem Kanal der Flut angeordnete Zunge geführt sind. Die Zungen sind gegeneinander um ca. 180° um die Rotationsachse des Turbinenrads versetzt und weisen insbesondere einen möglichst kleinen Abstand zum Rand des Turbinenrads auf, um ein Übersprechen zu minimieren oder ganz zu vermeiden. Gemäß der WO 2018/175678 A1 soll der Abstand der zweiten Zunge zu dem Turbinenrad größer sein gegenüber dem Abstand der ersten Zunge zu dem Turbinenrad, um die Lebensdauer der Zungen zu erhöhen. Die Zungen können wie in Figur 3 der WO 2018/175678 A1 gezeigt auch als dem Turbinenrad zugewandte Enden der Flutengehäusewände ausgebildet sein.

Eine gattungsbildende Anordnung eines schneckenartig ausgebildeten Dual Volute Turboladers wird auch in der DE 169 53 057 A1 beschrieben. Hier sind die Fluten sowohl axial als auch radial voneinander durch Trennwände getrennt. Es wird beschrieben, die Zwischenwände bis in unmittelbare Nähe eines zwischen den Zuströmkammern und dem Turbinenlaufrad angeordneten Düsenrings reichen zu lassen. Es sollen Überströmverluste zwischen den Fluten vermieden werden.

Das Ziel bisheriger Dual Volute-Konzepte ist es somit, die Flutentrennung möglichst lange aufrecht zu erhalten und den Übersprechquerschnitt zwischen den Fluten zu minimieren, um über eine verbesserte Abgaspulsausnutzung eine verbesserte Low-End-Torque und Dynamik-Performance zu ermöglichen. Höhere Lauflängen der Abgaspulse sind in diesem Fall ungünstig, obwohl sie die für eine hohe spezifische Leistung erforderliche zunehmende Entdrosselung der Abgaskanäle bzw. Reduzierung der Ausschiebearbeit ermöglichen. In diesem Zusammenhang werden oftmals verlängerte Auslasssteuerzeiten verwendet, um eine Frühverlagerung des Auslassöffnens bei vergleichbarem Auslassschluss zu erzielen, was zu einem Übersprechen des Abgases zwischen den Zylindern führen kann, wie vorstehend bereits ausgeführt.

Die bekannten Konzepte weisen jedoch insbesondere bei hohen Motordrehzahlen im Nennleistungsbereich einige Nachteile auf, wie beispielsweise eine Teilbeaufschlagung des Turbinenlaufrades, somit ein erhöhtes Aufstauverhalten und eine radiale Wechselbelastung des Turbinenlaufrades.

Vor diesem Hintergrund ist es die Aufgabe der vorliegenden Erfindung, eine Abgasturboladeranordnung mit einem schneckenartig ausgebildeten Gehäuse umfassend mindestens zwei getrennte Fluten anzugeben, welches die vorgenannten Nachteile insbesondere im Hinblick auf die Verminderung oder Vermeidung von einer erhöhten Klopfneigung und daraus folgend einer Reduzierung des Verbrennungswirkungsgrads und des erzeugbaren Drehmoments bei hohen spezifischen Leistungen.

Diese und weitere Aufgaben werden gelöst durch eine Abgasturboladeranordnung gemäß den Merkmalen des Anspruchs 1.

Die Erfindung umfasst eine Abgasturboladeranordnung für eine turboaufgeladene Brennkraftmaschine mit einem schneckenartig ausgebildetem Gehäuse, aufweisend mindestens zwei getrennte Fluten, mindestens eine die benachbarten Fluten trennende Trennzunge und ein Turbinenlaufrad, wobei die Trennzunge derart angeordnet ist, dass das dem Turbinenlaufrad zugewandte Ende der Trennzunge von dem Rand des Turbinenlaufrads derart beabstandet ist, dass ein Übersprechen zwischen den Fluten in Strömungsrichtung vor dem Turbinenlaufrad auftritt, wobei in Abhängigkeit des Abstands d_{π} zwischen dem Trennzungenende und dem Rand des Turbinenlaufrads ein Übersprechquerschnitt A_{ÜS} bestimmbar ist.

Erfindungsgemäß ist vorgesehen, dass die Abgasturboladeranordnung einen relativen Übersprechquerschnitt A_{REL} = A_{ÜS} / A_{TR} größer oder gleich 0,06, bevorzugt größer oder gleich 0,10 aufweist, wobei A_{TR} den Austrittsquerschnitt am Turbinenlaufrad angibt.

Mit anderen Worten ist ein Kerngedanke der vorliegenden Erfindung ein Dual Volute-Konzept zur Verfügung zu stellen, jedoch abweichend zu bestehenden Lösungen mit einem maximalen Übersprechquerschnitt zwischen den Einzelfluten am Turbinenrad. Somit steht für jeden Puls der gesamte Laufradumfang zur Durchströmung zur Verfügung. In der Folge gelingt es, das Aufstauverhalten zu verringern und gleichzeitig die Restgasausspülung insbesondere an der Nennleistung zu verbessern.

Die Maximierung des Übersprechquerschnittes zwischen den Einzelfluten führt zu einer Absenkung des zeitlich gemittelten Abgasgegendruckes vor Turbine. Das Konzept ist somit in erster Linie zur Optimierung des Nennleistungsbereichs geeignet.

Eine Maximierung des Übersprechquerschnittes wird vorliegend durch die Vergrößerung des Abstandes zwischen Trennzunge und Turbinenlaufrad erreicht. Die Charakterisierung der Übersprechquerschnitte erfolgt erfindungsgemäß durch Angabe der relativen Übersprechquerschnitte A_{REL}. Die relativen Übersprechquerschnitte A_{REL} beschreiben das Flächenverhältnis aus der Summe der Übersprechquerschnitte A_{ÜS} bezogen auf den Austrittsquerschnitt A_{TR} am Turbinenrad.

Die erfindungsgemäße Abgasturboladeranordnung eignet sich für eine turboaufgeladene Brennkraftmaschine. Es ist bekannt, dass durch einen Turbolader, auch Turbo, eine Leistungs- oder Effizienzsteigerung von Brennkraftmaschinen, wie z. B. von Otto- oder Dieselmotoren zum Antrieb von Kraftfahrzeugen, erreicht werden kann. Im Rahmen der vorliegenden Erfindung umfasst der Begriff Brennkraftmaschine insbesondere Ottomotoren, aber auch Dieselmotoren und Hybrid-Brennkraftmaschinen, d. h. Brennkraftmaschinen, die mit einem Hybrid-Brennverfahren betrieben werden, sowie Hybrid-Antriebe, die neben der Brennkraftmaschine eine mit der Brennkraftmaschine antriebsverbindbare Elektromaschine umfassen, welche Leistung von der Brennkraftmaschine aufnimmt oder als zuschaltbarer Hilfsantrieb zusätzlich Leistung abgibt.

Brennkraftmaschinen verfügen über einen Zylinderblock und einen Zylinderkopf, die zur Ausbildung der Zylinder miteinander verbunden werden. Der Zylinderkopf dient üblicherweise zur Aufnahme des Ventiltriebs. Um den Ladungswechsel zu steuern, benötigt eine Brennkraftmaschine Steuerorgane - in der Regel in Gestalt von Ventilen - und Betätigungseinrichtungen zur Betätigung dieser Steuerorgane. Der für die Bewegung der Ventile erforderliche Ventilbetätigungsmechanismus einschließlich der Ventile selbst wird als Ventiltrieb bezeichnet. Im Rahmen des Ladungswechsels erfolgt das Ausschieben der Verbrennungsgase über die Auslassöffnungen der mindestens zwei Zylinder und das Füllen der Brennräume, d. h. das Ansaugen des Frischgemisches bzw. der Ladeluft über die Einlassöffnungen.

Die Abgasleitungen, die sich an die Auslassöffnungen anschließen, sind nach dem Stand der Technik zumindest teilweise im Zylinderkopf integriert und werden zu einer gemeinsamen Gesamtabgasleitung oder aber gruppenweise zu zwei oder mehreren Gesamtabgasleitungen zusammengeführt. Das Zusammenführen von Abgasleitungen zu einer Gesamtabgasleitung wird im Allgemeinen und im Rahmen der vorliegenden Erfindung als Abgaskrümmer bezeichnet.

Abgasturbolader weisen eine Abgasturbine und einen Verdichter auf. Die Abgasturbine treibt den Verdichter an und erhöht den Luftdurchsatz oder vermindert die Ansaugarbeit des Kolbens. Die Abgasturbine bezieht ihre Antriebsenergie aus dem Restdruck des Abgases der Brennkraftmaschine.

Die Abgasturboladeranordnung für eine turboaufgeladene Brennkraftmaschine weist ein schneckenartig ausgebildetes Gehäuse auf. Wesentliche Teile des Turbinengehäuses sind ein Einlasstrichter, ein Laufradgehäuse mit einem Gaskanal, der sich vom Einlasstrichter ausgehend schneckenförmig verengt, ein Verbindungsflansch zum Lagergehäuse mit einer Öffnung, die groß genug ist, um das Turbinenrad einzuführen, und eine Dichtkante im Bereich des Einlasstrichters, an der der schneckenförmige Gaskanal endet. Es versteht sich, dass die vom Abgasstrom beaufschlagten Teile und Geometrien strömungstechnisch optimiert sind.

Der Gaskanal umfasst erfindungsgemäß mindestens zwei getrennte Fluten und mindestens eine die benachbarten Fluten trennende Trennzunge. Die Trennzunge kann als radial verlaufende Zwischenwand des schneckenartig ausgestalteten Gehäuses ausgebildet sein. Vorteilhaft sind Ausführungsformen der aufgeladenen Brennkraftmaschine, bei denen die Gehäusewandung eine unbewegliche, fest mit dem Gehäuse verbundene Wand ist. Diese Ausführung der Gehäusewandung gewährleistet, dass die vom heißen Abgas in die Gehäusewandung eingebrachte Wärme in vorteilhafter Weise und ausreichendem Maße in das und via Gehäuse abgeführt wird.

Erfindungsgemäß ist vorgesehen, dass die Trennzunge derart angeordnet ist, dass das dem Turbinenlaufrad zugewandte Ende der Trennzunge von dem Rand des Turbinenlaufrads derart beabstandet ist, dass ein Übersprechen zwischen den Fluten in Strömungsrichtung vor dem Turbinenlaufrad auftritt.

Mit anderen Worten wird erfindungsgemäß die Länge der Zwischenwand derart gewählt, dass diese nicht wie bisher möglichst nahe an den Rand der Turbine reicht sondern dass ein radialer bzw. tangentialer Spalt in Strömungsrichtung vor der Turbine vorgesehen ist. Hierdurch wird die Flutentrennung bereits vor der Turbine in nicht unerheblichem Maß aufgehoben. Ein Übersprechen der Abgasströme der Einzelfluten innerhalb des Turbinengehäuses wird ermöglicht.

Erfindungsgemäß ist weiterhin vorgesehen, dass in Abhängigkeit des Abstands d_{π} zwischen dem Trennzungenende und dem Rand des Turbinenlaufrads ein Übersprechquerschnitt A_{ÜS} bestimmbar ist.

Der Übersprechquerschnitt beschreibt einen Flächeninhalt, der sich durch den Abstand d_{TT} zwischen dem Trennzungenende und dem Rand des Turbinenlaufrads und anhand der Höhe des Gehäuses bestimmen lässt. Mit anderen Worten kann man anhand der bekannten Geometrie des Gehäuses und der Fluten im Bereich des Spalts vor der Turbine den Flächeninhalt des Übersprechbereichs leicht ermitteln.

Um die erfindungsgemäße Beabstandung des Trennzungenendes von dem Rand des Turbinenlaufrads besser von den bisher bekannten minimalen Abständen abgrenzen zu können, die allein dem Platzbedarf und der nötigen Freiheit des Laufrads dienten, wird erfindungsgemäß als Kenngröße ein relativer Übersprechquerschnitt A_{REL} herangezogen, der das Verhältnis des Übersprechquerschnitts A_{ÜS} zu dem Austrittsquerschnitt am Turbinenlaufrad A_{TR} angibt.

Das Turbinenlaufrad weist einen Turbinenlaufradaustrittsbereich mit einem Austrittsquerschnitt für das Abgas auf. Dies bedeutet, dass das Abgas das Turbinenrad über den Austrittsquerschnitt abströmen kann. Der Austrittsquerschnitt ist für eine bekannte Geometrie eines Turbinenlaufrads leicht bestimmbar und wird insbesondere von der Geometrie, der Abstände und der Öffnungsweite der Lücken zwischen den Turbinenschaufeln bestimmt.

Die Abgasturboladeranordnung weist erfindungsgemäß dass
a. einen relativen Übersprechquerschnitt A_{REL} = A_{ÜS}/ A_{TR} größer oder gleich 0,06, insbesondere größer oder gleich 0,1 aufweist, wenn das Turbinenlaufrad eine feste Turbinengeometrie aufweist, wobei
b. die Abgasturboladeranordnung einen relativen Übersprechquerschnitt A_{REL} = A_{ÜS}/ A_{TR} größer oder gleich 0,1 aufweist, wenn das Turbinenlaufrad eine variable Turbinengeometrie aufweist,

Mit anderen Worten ist bei der erfindungsgemäßen Abgasturboladeranordnung das Flächenverhältnis des Übersprechquerschnitts zu dem Austrittsquerschnitt des Turbinenlaufrads größer oder gleich 10% und im Falle eines Turbinenlaufrades mit fester Turbinengeometrie ist der Übersprechungsquerschnitt größer oder gleich 6 %.

In einer bevorzugten Ausgestaltung der Erfindung ist das Turbinenlaufrad eine Kartusche mit variabler Turbinengeometrie.

Die Turbine kann grundsätzlich mit einer variablen Turbinengeometrie ausgestattet werden, die durch Verstellen an den jeweiligen Betriebspunkt der Brennkraftmaschine angepasst werden kann. Eine sogenannte VTG-Kartusche umfasst drehbare Schaufeln und Hebel und eine turbinengehäuseseitige Scheibe sowie einen Schaufellagerring und einen Verstellring. Solche VTG-Kartuschen sind im Allgemeinen bekannt und beispielsweise in EP 1236866 A2, US 4629396 A, DE 202010015007 U1 oder EP 167980 A1 sowie in EP 1707755 A1 beschrieben und werden zur Regelung des Ladedrucks eingesetzt. Die Verstellung der Schaufeln in eine steile Stellung bewirkt, dass das Turbinenrad auch bei geringen Abgasmengen, also bei niedriger Last und geringer Motordrehzahl noch mit hoher Umfangsgeschwindigkeit durch das Abgas angeströmt wird und die Verluste an den Schaufeln durch den Eintrittsstoß klein bleiben. Bei kleiner Abgasmenge werden die Leitschaufeln flach gestellt, es ergibt sich für die Abgase ein geringerer Querschnitt in den Schaufeln. Damit in derselben Zeit trotzdem die gleiche Abgasmenge durch die Leitschaufeln strömen kann, müssen die wenigen Abgase schneller strömen. Dadurch ist die Drehzahl des Laders bei diesem Betriebszustand höher und bei einem Lastwechsel baut der Lader schneller Druck auf, weil er nicht erst noch hochdrehen muss.

In vorteilhafter Ausgestaltung der Erfindung ergibt sich der Übersprechquerschnitt A_{ÜS} aus der Addition eines äußeren Übersprechquerschnitts A_{ÜS_außen} und eines inneren Übersprechquerschnitts A_{ÜS_innen}, wobei der äußere Übersprechquerschnitt A_{ÜS_außen} in Abhängigkeit des Abstands zwischen dem Trennzungenende und dem Rand der Kartusche mit variabler Turbinengeometrie bestimmbar ist und der innere Übersprechquerschnitt A_{ÜS_innen} in Abhängigkeit des tangentialen Ringspalts innerhalb der Kartusche mit variabler Turbinengeometrie bestimmbar ist.

Mit anderen Worten kann bei dem Einsatz einer Kartusche eine Maximierung des Übersprechquerschnittes erreicht werden durch die Vergrößerung des Abstandes zwischen der Trennzunge und dem VTG-Schaufeleintritt, was im Folgenden mit dem Begriff des äußeren Übersprechquerschnitts charakterisiert wird, durch die Vergrößerung des Abstand zwischen dem VTG-Schaufelaustritt und dem Turbinenlaufrad (tangentialer Ringspalt innerhalb der Kartusche), was im Folgenden mit dem Begriff des inneren Übersprechquerschnitts charakterisiert wird, oder mit einer Kombination aus beiden Vergrößerungen.

In jedem Fall soll die Flutentrennung bereits vor Eintritt in die VTG-Kartusche aufgehoben werden. Somit steht für jeden Abgaspuls die gesamte VTG-Kartusche und der gesamte Laufradumfang zur Durchströmung zur Verfügung. In der Folge gelingt es, das Aufstauverhalten zu verringern und gleichzeitig die Restgasausspülung insbesondere an der Nennleistung zu verbessern.

Die Maximierung des Übersprechquerschnittes führt zu einer Absenkung des zeitlich gemittelten Abgasgegendruckes vor der VTG-Kartusche. Das Konzept ist somit in erster Linie zur Optimierung des Nennleistungsbereichs geeignet.

In einer weiteren Ausgestaltung dieser erfindungsgemäßen Abgasturboladeranordnung mit variabler Turbinengeometrie weist die Abgasturboladeranordnung einen relativen äußeren Übersprechquerschnitt A_{REL_außen} von größer oder gleich 0,1, bevorzugt von größer oder gleich 0,2, weiter bevorzugt von größer oder gleich 0,4 auf, ermittelt als Quotient aus dem äußeren Übersprechquerschnitt A_{ÜS_außen} und dem Austrittsquerschnitt am Turbinenlaufrad A_{TR}.

In einer Ausgestaltung einer Abgasturboladeranordnung mit variabler Turbinengeometrie weist sie einen relativen inneren Übersprechquerschnitt A_{REL_innen} von größer oder gleich 0,025, bevorzugt von ca. 0,03, auf, ermittelt als Quotient aus dem inneren Übersprechquerschnitt A_{ÜS_innen} und dem Austrittsquerschnitt am Turbinenlaufrad A_{TR}.

Konfigurationen, bei denen der äußere relative Übersprechquerschnitt eher klein ist, beispielsweise < 5%, und das erfindungsgemäß gewünschte Übersprechen in dem Abgasturbolader durch eine Vergrößerung des inneren relativen Übersprechquerschnitts, beispielsweise > 10%, erfolgt, sind ebenfalls von der vorliegenden Erfindung umfasst. Hierbei kann es jedoch zu einer Fehlanströmung des Turbinenlaufrads und somit zu einem reduzierten Turbinenwirkungsgrad kommen.

In weiteren bevorzugten Ausgestaltung der vorliegenden Erfindung weist die Abgasturboladeranordnung einen relativen Übersprechquerschnitt A_{REL} = A_{ÜS} / A_{TR} im Bereich größer oder gleich 0,20 auf, bevorzugt größer oder gleich 0,30 und besonders bevorzugt größer oder gleich 0,40.

Mit anderen Worten ist das Verhältnis bzw. der Quotient des Übersprechquerschnitts zu dem Austrittsquerschnitt des Turbinenlaufrads größer oder gleich 20%, bevorzugt größer oder gleich 30%, und besonders bevorzugt größer oder gleich 40%.

Anders ausgedrückt ist die Fläche, die dem Übersprechen des Abgases vor der Turbine zwischen den Fluten zu Verfügung steht, bevorzugt ca. halb so groß wie die Fläche, durch die das Abgas aus dem Turbinenlaufrad ausströmt. Der Übersprechquerschnitt kann sich bei der Verwendung einer VTG-Kartusche aus dem äußeren und dem inneren Übersprechquerschnitt additiv zusammensetzen: A_{ÜS} = A_{ÜS_außen} + A_{ÜS_innen}.

Mit den genannten Verhältnissen werden eine Reihe von Vorteilen erzielt, die in den bisherigen Turboladern nicht oder nicht in Kombination erzielbar sind. So wird ein maximaler Laufweg des Abgases in der Turbine erreicht, wobei gleichzeitig ein guter Turbinenwirkungsgrad sichergestellt werden kann und zudem ein gleiches Abgasgegendruckniveau der Einzelfluten. Dies gilt insbesondere im Nennlastbereich der Hochleistungsbrennkraftmaschine, für die die erfindungsgemäße Abgasturboladeranordnung ein optimiertes Konzept angibt.

In einer weiteren Ausgestaltung der Erfindung beträgt der Verdrehwinkel der Flutensegmente um die Turbinenachse (11) 180° +/- 45°, bevorzugt 180° +/- 20°, besonders bevorzugt 180° +/-5°.

Die Vermeidung des Abgasübersprechens wird somit primär durch die Maximierung der Lauflängen erzielt. Entsprechend resultiert aus dem typischen Design einer Dual-Volute-Turbine mit einem Verdrehwinkel von 180° um die Turbinenachse die maximale Lauflänge des Abgaspulses zwischen den Zylindern.

Verdrehwinkel der Volutensegmente, welche deutlich von 180° abweichen, sind erfindungsgemäß ebenfalls umfasst. Diese Konfigurationen haben strömungsmechanisch weniger Effizienz, da hieraus ein eher ungleiches Anstauverhalten der Einzelfluten und eine reduzierte Lauflänge zwischen den Zylindern resultieren.

Die Erfindung betrifft weiterhin eine Brennkraftmaschine mit Abgasturboaufladung, umfassend eine Abgasturboladeranordnung gemäß der vorstehend näher ausgeführten Erfindung.

Die Brennkraftmaschine umfasst bevorzugt eine entsprechend der Zündreihenfolge getrennte Abgaskrümmerführung mündend in die Abgasturboladeranordnung gemäß der vorstehend näher ausgeführten Erfindung.

Vorteilhaft sind Ausführungsformen der aufgeladenen Brennkraftmaschine, bei denen die Abgasleitungen der Zylinder jeder Zylindergruppe innerhalb des Zylinderkopfes unter Ausbildung von zwei Abgaskrümmern jeweils zu einer Gesamtabgasleitung zusammenführen. Die im Abgasabführsystem vorgesehene zweiflutige Turbine kann dann sehr nah am Auslass der Brennkraftmaschine, d. h. nahe an den Auslassöffnungen der Zylinder, angeordnet werden. Dies hat gleich mehrere Vorteile, insbesondere weil sich die Abgasleitungen zwischen den Zylindern und der Turbine verkürzen. Da sich der Weg zur Turbine für die heißen Abgase verkürzt, nimmt auch das Volumen der Abgaskrümmer bzw. des Abgasabführsystems stromaufwärts der Turbine ab. Die thermische Trägheit des Abgasabführsystems nimmt durch Reduzierung der Masse und der Länge der beteiligten Abgasleitungen ebenfalls ab. Auf diese Weise kann die Abgasenthalpie der heißen Abgase, die maßgeblich vom Abgasdruck und der Abgastemperatur bestimmt wird, optimal genutzt und ein schnelles Ansprechverhalten der Turbine gewährleistet werden.

Es gibt eine Vielzahl von Möglichkeiten, die Abgasturboladeranordnung auszugestalten und weiterzubilden. Hierfür darf zunächst auf die dem Patentanspruch 1 nachgeordneten Patentansprüche verwiesen werden. Im Folgenden dürfen zwei Ausgestaltungen der Erfindung anhand der Zeichnungen und den dazugehörigen Beschreibungen näher erläutert werden. In den Zeichnungen zeigt:
Fig. 1 in einer stark schematisierten Darstellung eine Querschnittsansicht einer beispielhaften Dual Volute-Abgasturboladeranordnung gemäß der vorliegenden Erfindung, und
Fig. 2 in einer stark schematisierten Darstellung eine Querschnittsansicht einer beispielhaften weiteren Ausgestaltung einer Abgasturboladeranordnung gemäß der vorliegenden Erfindung.

Die Figuren dienen der konzeptionellen Veranschaulichung und sind weder in ihren Dimensionen noch in ihren Proportionen maßstabsgerecht.

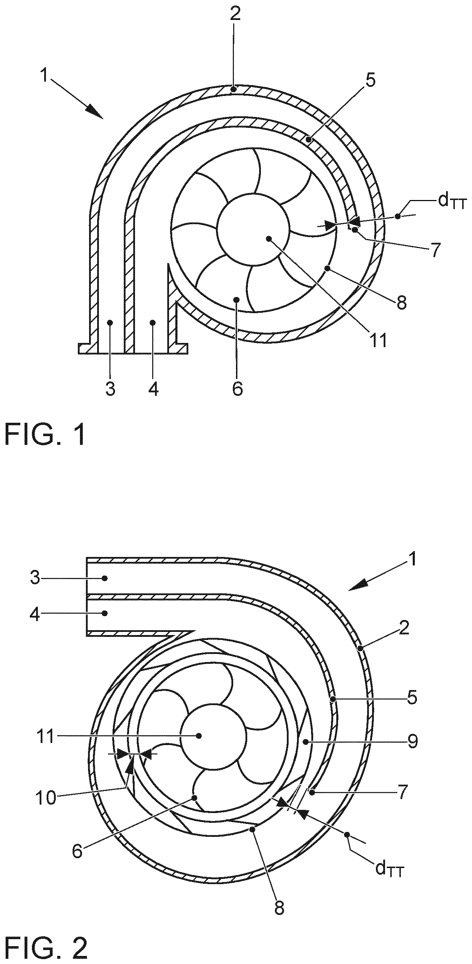

Figur 1 zeigt schematisch den prinzipiellen Aufbau einer Abgasturboladeranordnung 1 geschnitten senkrecht zur Drehachse 11 des Laufrades 6. Die dargestellte Turboladeranordnung 1 ist ein Beispiel für eine zweiflutige Turboladeranordnung 1, d. h. für eine Turboladeranordnung 1 mit zwei Fluten 3, 4. Die Turboladeranordnung 1 verfügt über ein Turbinengehäuse 2, in dem ein Laufrad 6 auf einer drehbaren Welle 11 gelagert ist. Die Turboladeranordnung 1 ist dadurch gekennzeichnet, dass die beiden Fluten 3, 4 übereinander angeordnet sind und das Laufrad 6 zumindest entlang eines bogenförmigen Abschnitts spiralförmig auf unterschiedlich großen Radien umschließen. Mit anderen Worten ist das Gehäuse 2 schneckenartig ausgebildet, wobei die Fluten 3, 4 durch eine radiale Gehäusewand als Trennzunge 5 getrennt sind und wobei das Turbinenlaufrad 6 etwa mittig im Gehäuse angeordnet ist (sogenanntes Dual Volute-Konzept). Die beiden Eintrittsöffnungen der Dual Volute Turbine 1 sind in einem Flansch des Gehäuses 2 radial unterschiedlich weit beabstandet zur Welle 11 des Turbinenlaufrads 6 angeordnet, wobei sich an jede Eintrittsöffnung eine Flut 3, 4 der Turboladeranordnung 1 anschließt und die beiden Fluten 3, 4 bis in die Nähe zum Laufrad 6 mittels Trennzunge 5 voneinander getrennt sind. Auf diese Weise werden die Abgasströme der beiden Fluten 3, 4 getrennt voneinander in die Richtung des Laufrads 6 geleitet.

Erfindungsgemäß ist vorgesehen, dass die Trennzunge 5 nicht bis möglichst nahe an den Rand 8 des Turbinenlaufrads 6 heraneicht. Vielmehr ist erfindungsgemäß ein Abstand des Trennzungenendes 7 zu dem Rand des Turbinenlaufrads 8 vorgesehen, welcher in den Figuren als d_{π} gekennzeichnet ist. In Abhängigkeit des Abstands d_{π} zwischen dem Trennzungenende 7 und dem Rand des Turbinenlaufrads 8 ist ein Übersprechquerschnitt A_{ÜS} bestimmbar, der als Flächenangabe beispielsweise durch Multiplikation des Abstands d_{π} mit der Flutenhöhe multipliziert mit der Anzahl der Trennzungen (in der Regel 2) erhalten bzw. abgeschätzt werden kann.

Erfindungsgemäß ist für das Verhältnis des Übersprechquerschnitts A_{ÜS} zum Austrittsquerschnitt des Turbinenlaufrads 6 vorgesehen, dass die Abgasturboladeranordnung 1 einen solchen relativen Übersprechquerschnitt A_{REL} = A_{ÜS} / A_{TR} größer oder gleich 0,06 aufweist, wobei A_{TR} den Austrittsquerschnitt am Turbinenlaufrad 6 angibt. Mit anderen Worten beträgt die Fläche vor der Turbine, die ein Übersprechen der Abgasströme in Bezug auf die Flutentrennung erlaubt, mindestens 6% der Austrittsfläche des Turbinenlaufrads. Bevorzugt ist sie jedoch größer, beispielsweise größer als 10% der Austrittsfläche, bevorzugt größer oder gleich 20%, und besonders bevorzugt beträgt sie 30%, oder mehr bezogen auf die Austrittsfläche. Hierdurch werden gerade für den Bereich der Nennleistung und der hohen Drehzahlen der Brennkraftmaschine einige Vorteile erzielt, die insbesondere in Kombination mit bisherigen Konstruktionen nicht erzielt werden konnten. Neben einem maximalen Laufweg des Abgases in der Turbine, wobei gleichzeitig ein guter Turbinenwirkungsgrad sichergestellt werden kann, kann zudem ein gleiches Abgasgegendruckniveau der Einzelfluten erreicht werden. Durch einen Verdrehwinkel der Flutensegmente um die Turbinenachse 11 von 180° +/-45°, bevorzugt 180° +/- 20°, besonders bevorzugt 180° +/- 5°, wird die Vermeidung des Abgasübersprechens zwischen den Zylindern der Brennkraftmaschine somit primär durch die Maximierung der Lauflängen erzielt.

Figur 2 zeigt schematisch den prinzipiellen Aufbau einer weiteren Ausgestaltung der Abgasturboladeranordnung 1 geschnitten senkrecht zur Drehachse 11 des Laufrades 6. Die dargestellte Turboladeranordnung 1 ist wiederum ein Beispiel für eine zweiflutige Turboladeranordnung 1, d. h. für eine Turboladeranordnung 1 mit zwei Fluten 3, 4. Gleiche Bezugszeichen wie in Figur 1 bezeichnen die gleichen Funktionsbauteile. Die Turboladeranordnung 1 verfügt im Unterschied zu der Ausgestaltung der Figur 1 nicht über ein einfaches Turbinenlaufrad 6, sondern an dessen Stelle ist eine Kartusche mit einer variablen Turbinengeometrie 9 angeordnet. Die Kartusche mit variabler Turbinengeometrie 9 weist in ihrem Zentrum ein Turbinenlaufrad 6 auf, welches auf einer Welle 11 beweglich gelagert ist. Um das Turbinenlaufrad 6 herum und von diesem durch einen Ringspalt 10 beabstandet ist einen Schaufellagerring bzw. einen Trägerring mit den verstellbaren Schaufeln.

In vorteilhafter Ausgestaltung der Erfindung ergibt sich der Übersprechquerschnitt A_{ÜS} aus der Addition eines äußeren Übersprechquerschnitts A_{ÜS_außen} und eines inneren Übersprechquerschnitts A_{ÜS_innen}, wobei der äußere Übersprechquerschnitt A_{ÜS_außen} in Abhängigkeit des Abstands d_{TT} zwischen dem Trennzungenende und dem Rand 8 der Kartusche mit variabler Turbinengeometrie 9 bestimmbar ist und der innere Übersprechquerschnitt A_{ÜS_innen} in Abhängigkeit des tangentialen Ringspalts 10 innerhalb der Kartusche mit variabler Turbinengeometrie 9 bestimmbar ist. Die Turboladeranordnung 1 in Fig. 2 weist einen relativen Übersprechungsquerschnitt größer gleich 10% auf.

Mit anderen Worten kann bei dem Einsatz einer Kartusche 9 eine Maximierung des Übersprechquerschnittes erreicht werden durch die Vergrößerung des Abstandes d_{TT} zwischen der Trennzunge und dem VTG-Schaufeleintritt 8, was im Folgenden mit dem Begriff des äußeren Übersprechquerschnitts charakterisiert wird, durch die Vergrößerung des Abstands zwischen dem VTG-Schaufelaustritt und dem Turbinenlaufrad (tangentialer Ringspalt 10 innerhalb der Kartusche 9), was im Folgenden mit dem Begriff des inneren Übersprechquerschnitts charakterisiert wird, oder mit einer Kombination aus beiden Vergrößerungen.

In jedem Fall soll die Flutentrennung bereits vor Eintritt in die VTG-Kartusche 9 aufgehoben werden. Somit steht für jeden Abgaspuls die gesamte VTG-Kartusche 9 und der gesamte Laufradumfang zur Durchströmung zur Verfügung. In der Folge gelingt es, das Aufstauverhalten zu verringern und gleichzeitig die Restgasausspülung insbesondere an der Nennleistung zu verbessern. Die Maximierung des Übersprechquerschnittes führt zu einer Absenkung des zeitlich gemittelten Abgasgegendruckes vor der VTG-Kartusche 9. Das Konzept ist somit in erster Linie zur Optimierung des Nennleistungsbereichs geeignet.

In einer weiteren Ausgestaltung dieser erfindungsgemäßen Abgasturboladeranordnung 1 mit variabler Turbinengeometrie weist die Abgasturboladeranordnung 1 einen relativen äußeren Übersprechquerschnitt A_{REL_außen} von größer oder gleich 0,10, bevorzugt größer oder gleich 0,20, weiter bevorzugt größer oder gleich 0,40 auf, ermittelt als Quotient aus dem äußeren Übersprechquerschnitt A_{ÜS_außen} und dem Austrittsquerschnitt am Turbinenlaufrad A_{TR}.

In einer Ausgestaltung einer Abgasturboladeranordnung 1 mit variabler Turbinengeometrie weist sie einen relativen inneren Übersprechquerschnitt A_{REL_innen} von größer oder gleich 0,025, bevorzugt von ca. 0,03, auf, ermittelt als Quotient aus dem inneren Übersprechquerschnitt A_{ÜS_innen} und dem Austrittsquerschnitt am Turbinenlaufrad A_{TR}.

### Bezugszeichenliste

- 1: Abgasturboladeranordnung
- 2: Gehäuse
- 3: Einzelflut
- 4: Einzelflut
- 5: Trennzunge
- 6: Turbinenlaufrad
- 7: Ende der Trennzunge
- 8: Rand des Turbinenlaufrads
- 9: Kartusche mit variabler Turbinengeometrie
- 10: Ringspalt
- 11: Turbinenachse

- d_{TT}: Abstand zwischen dem Trennzungenende und dem Rand des Turbinenlaufrads
- A_{ÜS}: Übersprechquerschnitt
- A_{TR}: Austrittsquerschnitt am Turbinenlaufrad
- A_{REL}: relativen Übersprechquerschnitt
- A_{ÜS_außen}: äußerer Übersprechquerschnitt
- A_{ÜS_innen}: innerer Übersprechquerschnitt

## Patentansprüche

1. Abgasturboladeranordnung (1) für eine turboaufgeladene Brennkraftmaschine mit einem schneckenartig ausgebildetem Gehäuse (2), aufweisend mindestens zwei getrennte Fluten (3, 4), mindestens eine die benachbarten Fluten (3, 4) trennende Trennzunge (5) und ein Turbinenlaufrad (6), wobei die Trennzunge (5) derart angeordnet ist, dass das dem Turbinenlaufrad (6) zugewandte Ende (7) der Trennzunge (5) von dem Rand (8) des Turbinenlaufrads (6) derart beabstandet ist, dass ein Übersprechen zwischen den Fluten (3, 4) in Strömungsrichtung vor dem Turbinenlaufrad (6) auftritt, wobei in Abhängigkeit des Abstands d_{π} zwischen dem Trennzungenende (7) und dem Rand des Turbinenlaufrads (8) ein Übersprechquerschnitt A_{ÜS} bestimmbar ist, **dadurch gekennzeichnet, dass**
a) die Abgasturboladeranordnung (1) einen relativen Übersprechquerschnitt A_{REL} = A_{ÜS}/ A_{TR} größer oder gleich 0,06, insbesondere größer oder gleich 0,1 aufweist, wenn das Turbinenlaufrad (6) eine feste Turbinengeometrie aufweist, wobei
b) die Abgasturboladeranordnung (1) einen relativen Übersprechquerschnitt A_{REL} = A_{ÜS} / A_{TR} größer oder gleich 0,1 aufweist, wenn das Turbinenlaufrad (6) eine variable Turbinengeometrie (9) aufweist,
wobei A_{TR} den Austrittsquerschnitt am Turbinenlaufrad (6) angibt.

2. Abgasturboladeranordnung (1) nach Anspruch 1, wobei sich der Übersprechquerschnitt A_{ÜS} aus der Addition eines äußeren Übersprechquerschnitts A_{ÜS_außen} und eines inneren Übersprechquerschnitts A_{ÜS_innen} ergibt, wobei der äußere Übersprechquerschnitt A_{ÜS_außen} in Abhängigkeit des Abstands zwischen dem Trennzungenende (7) und dem Rand (8) der Kartusche mit variabler Turbinengeometrie (9) bestimmbar ist und der innere Übersprechquerschnitt A_{ÜS_innen} in Abhängigkeit des tangentialen Ringspalts (10) innerhalb der Kartusche mit variabler Turbinengeometrie (9) bestimmbar ist.

3. Abgasturboladeranordnung (1) nach einem der vorhergehenden Ansprüche, wobei die Abgasturboladeranordnung (1) einen relativen Übersprechquerschnitt A_{REL} = A_{ÜS} / A_{TR} im Bereich größer oder gleich 0,20 aufweist, bevorzugt größer oder gleich 0,30 und besonders bevorzugt größer oder gleich 0,40.

4. Abgasturboladeranordnung (1) nach einem der vorhergehenden Ansprüche 1 bis 3, wobei die Abgasturboladeranordnung (1) einen relativen äußeren Übersprechquerschnitt A_{REL_außen} von größer oder gleich 0,10, bevorzugt größer oder gleich 0,20, weiter bevorzugt größer oder gleich 0,40 aufweist, ermittelt als Quotient aus dem äußeren Übersprechquerschnitt A_{ÜS_außen} und dem Austrittsquerschnitt am Turbinenlaufrad (6) A_{TR}.

5. Abgasturboladeranordnung (1) nach einem der vorhergehenden Ansprüche 1 bis 4, wobei die Abgasturboladeranordnung (1) einen relativen inneren Übersprechquerschnitt A_{REL_innen} von größer oder gleich 0,025, bevorzugt von ca. 0,03, aufweist, ermittelt als Quotient aus dem inneren Übersprechquerschnitt A_{ÜS_innen} und dem Austrittsquerschnitt am Turbinenlaufrad (6) A_{TR}.

6. Abgasturboladeranordnung (1) nach einem der vorhergehenden Ansprüche, wobei der Verdrehwinkel der Flutensegmente um die Turbinenachse (11) 180° +/- 45° beträgt, bevorzugt 180° +/- 20°, besonders bevorzugt 180° +/- 5°.

7. Brennkraftmaschine mit Abgasturboaufladung, umfassend eine Abgasturboladeranordnung (1) gemäß einem der vorstehenden Ansprüche.

8. Brennkraftmaschine nach Anspruch 7, umfassend eine entsprechend der Zündreihenfolge getrennte Abgaskrümmerführung mündend in die Abgasturboladeranordnung (1).
